# EUROPÄISCHE PATENTSCHRIFT

(11) **EP 2 123 104 B1**
(45) Veröffentlichungstag und Bekanntmachung des Hinweises auf die Patenterteilung: **05.06.2019**
(21) Anmeldenummer: 08706780.7
(22) Anmeldetag: 22.01.2008
(51) Int. Cl.: H04Q 11/04

(54) **VERFAHREN UND BREITBANDIGES ZUGANGSSYSTEM ZUR FERNGESTEUERTEN SPRACHSCHNITTSTELLENSTEUERUNG EINES ZUGANGSKNOTEN**
METHOD AND BROADBAND ACCESS SYSTEM FOR REMOTE-CONTROLLING A VOICE INTERFACE OF AN ACCESS NODE
PROCÉDÉ ET SYSTÈME D'ACCÈS LARGE BANDE POUR LA COMMANDE D'INTERFACES VOCALES TÉLÉCOMMANDÉES D'UN NOEUD D'ACCÈS

(30) Priorität: 19.02.2007 DE 102007008463
(43) Veröffentlichungstag der Anmeldung: 25.11.2009
(73) Patentinhaber: Deutsche Telekom AG, 53113 Bonn (DE)
(72) Erfinder: HAAG, Thomas, 63110 Rodgau (DE)
(74) Vertreter: Blumbach · Zinngrebe Patent- und Rechtsanwälte
(86) Internationale Anmeldenummer: PCT/DE2008/000102
(87) Internationale Veröffentlichungsnummer: WO 2008/101454

(56) Entgegenhaltungen:
- EP-A- 1 536 608
- WO-A-2005/074462
- US-A1- 2004 066 923
- US-A1- 2004 107 299

## Beschreibung

Die Erfindung betrifft ein Verfahren zur teilnehmerbezogenen Schnittstellensteuerung eines Zugangsknotens, der über ein IP-basiertes Kommunikationsnetz mit einem VoIP-Server verbunden ist. Ferner betrifft die Erfindung ein breitbandiges Zugangssystem zur teilnehmerbezogenen Schnittstellensteuerung eines Zugangsknotens sowie einen in einem solchen breitbandigen Zugangsnetz einsetzbaren Zugangsknoten.

Breitbandige Zugangsnetze dienen unter anderem dazu, Teilnehmern einen Zugang zu IP-basierten Netzen, beispielsweise zum Internet zu ermöglichen. Solche breitbandige Zugangsnetze umfassen in der Regel mehrere Zugangsmultiplexer, auch Zugangsknoten (deutsch für: Access Node (AN)) genannt. An die Zugangsknoten können Teilnehmer-Endgeräte über Teilnehmer-Anschlussleitungen angeschlossen werden. Bekannte Zugangsknoten sind zum Beispiel DSLAMs (Digital Subscriber Line Access Multiplexer), an die über digitale Teilnehmeranschlussleitungen (DSL) Endgeräte angeschlossen werden können. Analoge und digitale Telefone werden hierbei mittels eines teilnehmerseitigen Netzabschlusses und Computer mittels eines DSL-Modems über einen Splitter mit der digitalen Teilnehmer-Anschlussleitung verbunden. Im DSLAM ist wiederum ein Splitter angeordnet, der Sprachsignale einem herkömmlichen Fernsprechnetznetz und breitbandige Daten dem Internet zuführt. Eine Übertragung von Sprachsignalen über das Internet ist mit derartigen Zugangsnetzen jedoch nicht möglich.

Darüber hinaus gibt es Lösungsansätze, die auf dem von der ITU standardisierten H.248 Gateway-Kontrollprotokoll basieren. Dieses Protokoll steuert die Übertragung von Sprach- und Signalisierungsdaten über ein Media-Gateway, welches Sprachsignale in VoIP-Signale umsetzt. Mit den bestehenden Lösungen ist es jedoch nicht möglich, herkömmliche analoge oder digitale Telefone, wie zum Beispiel ISDN-Telefone zu verwenden, um VoIP-Signale am Zugangsknoten über das Internet übertragen und empfangen zu können.

Aus der US 2004/066923 A1 ist ein Gateway bekannt, an welches über separate Leitungen nicht IP-taugliche digitale Nebenstellenapparate angeschlossen werden können, wobei das Gateway in Verbindung mit einem IP Call Controller eine TK-Anlage bildet und eine IP-basierte Inhaus-Kommunikation zwischen nicht IP-tauglichen Nebenstellen-Geräten ermöglicht.

Der vorliegenden Erfindung liegt die Aufgabe zugrunde, herkömmliche analoge und digitale Fernsprechgeräte an ein breitbandiges Zugangsnetz anschließen zu können, um VoIP-Signale über ein IP-basiertes Kommunikationsnetz, insbesondere das Internet, unter Verwendung eines Zugangsknotens übertragen zu können. Ein weiterer Gesichtspunkt der Erfindung ist darin zu sehen, Zugangsknoten bereitzustellen, die in einfacher Weise zum Anschließen von herkömmlichen analogen oder digitalen Fernsprechgeräten angepasst werden können.

Ein Kerngedanke der Erfindung ist darin zu sehen, Zugangsknoten mit fernsteuerbaren Sprachschnittstellen oder Sprachports bereitzustellen, die über ein IP-basiertes Signalisierungsprotokoll Steuerdaten mit einem VoIP-Server austauschen können.

Das oben genannte technische Problem wird durch ein Verfahren zur teilnehmerbezogenen Schnittstellensteuerung eines Zugangsknotens, der über ein IP-basiertes Kommunikationsnetz mit einem VoIP-Server verbunden ist, gelöst. An den Zugangsknoten können mehrere Teilnehmer-Endgeräte über Teilnehmer-Anschlussleitungen angeschlossen werden. An dieser Stelle sei bereits erwähnt, dass es sich bei den Teilnehmer-Endgeräten um herkömmliche analoge und digitale Telefone, wie zum Beispiel ISDN-Telefone, handeln kann. Analoge Endeinrichtungen werden nachfolgen als POTS (Plain Old Telefon Service)-Geräte bezeichnet. Als Teilnehmer-Anschlussleitungen dienen beispielsweise analoge Anschlussleitungen, ISDN-Anschlussleitungen und auch digitale Teilnehmer-Anschlussleitungen, auch Digital Subscriber Lines genannt.

Teilnehmerbezogene Daten werden in einer dem VoIP-Server zugeordneten Speichereinrichtung abgelegt. Die teilnehmerbezogenen Daten werden zur Fernkonfigurierung wenigstens einer Sprachschnittstelle des Zugangsknotens verwendet. Bei der erstmaligen Einrichtung des Zugangsknotens oder auch während des Betriebs ermittelt der Zugangsknoten, ob ein Teilnehmer-Endgerät an einer Schnittstelle angeschlossen ist. Wenn ja, werden der Schnittstelle zugeordnete Identifizierungsdaten vom Zugangsknoten zum VoIP-Server unter Verwendung eines IP-basierten Signalisierungsprotokolls übertragen. Unter Ansprechen auf die empfangenen Schnittstellen-Identifikationsdaten liest der VoIP-Server die für diese Schnittstelle hinterlegten teilnehmerbezogenen Daten aus der Speichereinrichtung aus und überträgt sie zum Zugangsknoten unter Verwendung des IP-basierten Signalisierungsprotokolls. Bereits an dieser Stelle sei erwähnt, dass es sich bei den teilnehmerbezogenen Daten um teilnehmerrelevante Zugangsdaten, wie zum Beispiel eine Teilnehmerrufnummer, einen SIP-Identifizierer und um wenigstens ein Dienstleistungsmerkmal wenigstens eines analogen oder digitalen Teilnehmeranschlusses handeln kann. Unter Verwendung der empfangenen teilnehmerbezogenen Daten wird der Zugangsknoten derart konfiguriert, dass die ermittelte Schnittstelle, an der ein Teilnehmer-Endgerät angeschlossen worden ist, als Sprachschnittstelle betrieben wird. Je nachdem, ob es sich bei dem angeschalteten Teilnehmer-Endgerät um ein analoges oder digitales Fernsprechgerät handelt, wird die Sprachschnittstelle des Zugangsknotens als ISDN- oder POTS-Sprachschnittstelle konfiguriert. Angemerkt sei, dass die ferngesteuerte Konfiguration des Zugangsknotens nicht vom Netzbetreiber durch eine entsprechende Netzkonfiguration, sondern durch das Erkennen des Anschaltens eines Teilnehmer-Endgerätes an den Zugangsknoten ausgelöst wird.

Bei den Dienstleistungsmerkmalen, welche über die teilnehmerbezogenen Daten der Sprachschnittstelle zugeordnet werden, kann es sich beispielsweise um Dreierkonferenz, Makeln und dergleichen handeln.

Handelt es sich bei dem angeschalteten Teilnehmer-Endgerät um ein ISDN-Telefon, enthalten die teilnehmerrelevanten Zugangsdaten zum Beispiel die ISDN-Mehrfachrufnummer. Wird hingegen ein analoges Fernsprechgerät an den Zugangsknoten angeschlossen, enthalten die teilnehmerrelevanten Zugangsdaten die E.164-Rufnummer des entsprechenden Teilnehmeranschlusses. Der SIP (Session Initiation Protocol)-Identifizierer kann einen Uniform Resource Identifier (URI) und/oder eine TCP-Portnummer handeln. Angemerkt sei, dass ein Teilnehmer-Endgerät auch eine Netzabschlusseinrichtung enthalten kann, an die analoge und/oder digitale Endeinrichtungen angeschlossen werden können.

Eine Aufgabe des Zugangsknotens ist es, wie später noch näher ausgeführt wird, die der Sprachschnittstelle zugeordnete Teilnehmerrufnummer des angeschlossenen Teilnehmer-Endgerätes in den entsprechenden SIP-Identifizierer und umgekehrt umzusetzen.

Die Sprachschnittstelle, an die ein Teilnehmer-Endgerät angeschlossen worden ist, wird durch ein eindeutiges Schnittstellen-Adressierungsschema identifiziert. Insbesondere wird hierfür die Nummer eines Steckplatzes, in welchen eine Leitungskarte einsetzbar ist, und die Portnummer verwendet.

Da durch die Schnittstellen-Identifizierungsdaten die zum angeschalteten Teilnehmer-Anschluss gehörenden teilnehmerbezogenen Daten dem VoIP-Server bekannt sind, ist mit der automatischen Erkennung der Sprachschnittstelle auch eine eindeutige Erkennung des Teilnehmeranschlusses - analoger (POTS)- oder digitaler (ISDN)-Anschluss - der an diese Sprachschnittstelle angeschlossen ist möglich.

Um eine VoIP-Sprachübertragung zwischen herkömmlichen analogen oder digitalen Fernsprechgeräten und dem Internet zu ermöglichen, werden die von einem analogen oder digitalen Teilnehmer-Endgerät kommenden Sprach- und Signalisierungssignale im Zugangsknoten in VoIP-Signale zur Übertragung zum VoIP-Server umgesetzt. In umgekehrter Richtung werden die vom VoIP-Server kommenden VoIP-Signale im Zugangsknoten in Sprach- und Signalisierungssignale zur Übertragung an ein analoges oder digitales Teilnehmer-Endgerät umgesetzt. Diese Methode ist an sich bekannt.

Um Sprachsignale zwischen dem Zugangsknoten und dem VoIP-Server austauschen zu können, wird unter Steuerung des Zugangsknotens eine VoIP-Verbindung zwischen dem Zugangsknoten und dem VoIP-Server aufgebaut, über die Sprachsignale zwischen dem an der ermittelten Schnittstelle angeschlossenen Teilnehmer-Endgerät und dem VoIP-Server ausgetauscht werden. Hierzu kann beispielsweise im Zugangsknoten das SIP (Session Initiation Protocol) angewandt werden.

Die teilnehmerbezogene, fernsteuerbare Schnittstellensteuerung des Zugangsknotens ermöglicht ferner eine Prüfung der Teilnehmer-Anschlussleitung, an welcher ein Teilnehmer-Endgerät angeschlossen ist. Hierzu wird ein Steuerbefehl unter Verwendung des IP-basierten Signalisierungsprotokolls von dem VoIP-Server zum Zugangsknoten zum Aktivieren der Prüfung einer Teilnehmer-Anschlussleitung zwischen Zugangsknoten und dem an der Schnittstelle angeschlossenen Teilnehmer-Endgerät übertragen. Anschließend wird die an der jeweiligen Schnittstelle angeschaltete Teilnehmer-Anschlussleitung geprüft. Eine Information, die auf den Zustand der Teilnehmer-Anschlussleitung hinweist, wird unter Verwendung des IP-basierten Signalisierungsprotokolls vom Zugangsknoten zum VoIP-Server übertragen.

Angemerkt sei, dass der Zugangsknoten in an sich bekannter Weise Teilnehmer-Anschlussleitungen, die mit einem ISDNbasierter Anschluss oder mit einem POTS-basierten Anschluss abgeschlossen sind, prüfen kann. Wird eine Teilnehmer-Anschlussleitung durch einen POTS-Anschluss abgeschlossen, wird eine Schleifenprüfung durchgeführt, indem an der beschalteten Sprachschnittstelle des Zugangsknotens eine Widerstands-, Strom- oder Spannungsmessung erfolgt. Wird die Teilnehmer-Anschlussleitung durch ISDN-basierten Anschluss abgeschlossen, wird beispielsweise ein entsprechendes Prüfwort zum ISDN-Teilnehmeranschluss übertragen, der eine Antwort zurückschickt. Die Anwort kann einen Fehler oder eine fehlerfrei betriebene Teilnehmer-Anschlussleitung signalisieren.

Bei dem IP-basierten Signalisierungsprotokoll kann es sich um ein modifiziertes Access Node Control Protocol (ANCP) handeln. Das ANCP ist ein in der Standardisierung befindliches Steuerprotokoll, welches die Kommunikation zwischen einem DSLAM und einem Breitband-Zugangsserver steuert. Das ANCP wird erfindungsgemäß modifiziert, um Signalisierungsdaten zwischen dem Zugangsknoten und dem VoIP-Server austauschen zu können, damit Sprachsignale von herkömmlichen analogen oder digitalen Fernsprechgeräten über das Internet übertragen oder empfangen werden können.

Das oben genannte technische Problem wird ebenfalls durch ein breitbandiges Zugangssystem zur teilnehmerbezogenen Schnittstellensteuerung eines Zugangsknotens gelöst.

Das breitbandige Zugangssystem weist wenigstens einen fernsteuerbaren Zugangsknoten auf, der über ein IP-basiertes Kommunikationsnetz mit einem VoIP-Server verbunden ist. Weiterhin ist wenigstens eine analoge und digitale Teilnehmer-Endeinrichtung vorgesehen, die über eine Teilnehmer-Anschlussleitung an den Zugangsknoten angeschlossen werden kann. Je nach Ausführung der Teilnehmer-Endeinrichtung kann es sich bei der Teilnehmer-Anschlussleitung um eine analoge Anschlussleitung, eine ISDN-Anschlussleitung oder eine digitale Teilnehmer-Anschlussleitung (DSL) handeln. Dem VoIP-Server ist eine Speichereinrichtung zugeordnet, in der teilnehmerbezogene Daten zur Konfiguration der wenigstens einen Sprachschnittstelle des Zugangsknotens gespeichert sind. Die teilnehmerbezogenen Daten sind einem Teilnehmeranschluss zugeordnet, der an eine bestimmte Schnittstelle des Zugangsknotens angeschlossen wird.

Der Zugangsknoten weist wenigstens eine Sprachschnittstelle, eine Speichereinrichtung zum Speichern einer Identifizierungsinformation über die Sprachschnittstelle sowie eine Erkennungseinrichtung auf, die feststellt, ob an der Sprachschnittstelle eine Teilnehmer-Endeinrichtung angeschlossen ist. Ferner weist der Zugangsknoten eine Einrichtung zum Austauschen von Signalisierungsinformationen mit dem VoIP-Server unter Verwendung eines IP-basierten Signalisierungsprotokolls auf. Zudem ist eine Einrichtung zum Konfigurieren der Sprachschnittstelle unter Ansprechen auf die der Sprachschnittstelle zugeordneten teilnehmerbezogenen Datei vorgesehen. Der VoIP-Server ist zum Auslesen und Übertragen von teilnehmerbezogenen Daten zum Zugangsknoten unter Ansprechen auf eine empfangende Identifizierungsinformation einer Sprachschnittstelle des Zugangsknotens ausgebildet.

Vorteilhafte Weiterbildungen sind Gegenstand der Unteransprüche.

Um eine VoIP-Sprachübertragung für herkömmliche analoge oder digitale Fernsprechgeräte zu ermöglichen, ist der Zugangsknoten derart konfigurierbar, dass die Sprachschnittstelle zum Übertragen und Empfangen von Sprachsignalen zu beziehungsweise von einem analogen oder digitalen Teilnehmer-Anschluss fähig ist.

Um zur Übertragung von VoIP-Signalen keine Umstrukturierung des Kommunikationsnetzes vornehmen zu müssen, weist der Zugangsknoten eine Umsetzungseinrichtung auf, die Sprachsignale, die von einer analogen oder digitalen Teilnehmer-Endeinrichtung kommen, in VoIP-Signale umsetzen kann, und die VoIP-Signale in Sprachsignale zur Übertragung zu eine analogen oder digitalen Teilnehmer-Endeinrichtung umsetzen kann. Derartige Umsetzungseinrichtungen sind bekannt.

Um in einfacher Weise und ohne Bedienpersonal eine Teilnehmer-Anschlussleitung, die durch den Zugangsknoten und eine Teilnehmer-Endeinrichtung abgeschlossen ist, prüfen zu können, weist der Zugangsknoten eine Prüfeinrichtung auf, die unter Ansprechen auf einen Steuerbefehl des VoIP-Servers eine Prüfung der Teilnehmer-Anschlussleitung durchführt.

Um auch breitbandige Daten von einer Teilnehmer-Endeinrichtung über das Zugangssystem zum Internet übertragen und vom Internet empfangen zu können, weist der Zugangsknoten wenigstens eine breitbandige Datenschnittstelle auf, an die beispielsweise ein Computer angeschlossen werden kann. Weiterhin verfügt der Zugangsknoten über eine Schnittstelle, über die eine IP-basierte Verbindung zu einem IP-Gateway hergestellt werden kann.

Ferner weist der Zugangsknoten eine Steuereinrichtung auf, die zum Herstellen einer IP-basierten Sprachkommunikationsverbindung zum VoIP-Server ausgebildet ist. Die Steuereinrichtung wendet beispielsweise das SIP (Session Initiation Protocol) an.

Das oben genannte technische Problem wird ferner durch einen Zugangsknoten zum Einsatz in einem derartigen breitbandigen Zugangssystem gelöst.

Der Zugangsknoten umfasst wenigstens eine Sprachschnittstelle, eine Speichereinrichtung zum Speichern einer Identifizierungsinformation über die Sprachschnittstelle, eine Einrichtung zum Erkennen, ob an der Sprachschnittstelle eine Teilnehmer-Endeinrichtung angeschlossen ist, eine Einrichtung zum Austauschen von Signalisierungsinformationen mit einem VoIP-Server unter Verwendung eines IP-basierten Signalisierungsprotokolls, eine Einrichtung zum Fernsteuern der Sprachschnittstelle unter Ansprechen auf der Sprachschnittstelle zugeordnete teilnehmerbezogene Daten.

Gemäß einer vorteilhaften Weiterbildung weist der Zugangsknoten eine Umsetzungseinrichtung auf, die Sprachsignalen, die von einer analogen oder digitalen Teilnehmer-Endeinrichtung kommen, in VoIP-Signale umsetzen kann, und die VoIP-Signalen in Sprachsignale zur Übertragung zu einer analogen oder digitalen Teilnehmer-Endeinrichtung umsetzen kann. In vorteilhafter Weise weist der Zugangsknoten eine fernsteuerbare Prüfeinrichtung auf, die unter Ansprechen auf einen Steuerbefehl von einem VoIP-Server eine Prüfung einer Teilnehmer-Anschlussleitung, die durch den Zugangsknoten und einer analogen oder digitalen Teilnehmer- Endeinrichtung abgeschlossen ist, durchführt.

Die Erfindung wird nachfolgend anhand eines Ausführungsbeispiels in Verbindung mit den beiliegenden Zeichnungen näher erläutert. Es zeigen:
- Fig. 1: ein Blockschaltbild eines beispielhaften breitbandigen Zugangsnetzes, in dem die Erfindung verwirklicht ist,
- Fig. 2: einen Nachrichtenfluss zur Aktivierung einer ISDN-Sprachschnittstelle,
- Fig. 3: einen Nachrichtenfluss zur Aktivierung einer herkömmlichen analogen Sprachschnittstelle,
- Fig. 4: einen Nachrichtenfluss zur Aktivierung einer Teilnehmer-Anschlussleitung, die durch einen ISDN-Teilnehmeranschlusses abgeschlossen worden ist,
- Fig. 5: einen Nachrichtenfluss zur Aktivierung einer Schleifenprüfung hinsichtlich eines herkömmlichen analogen Teilnehmeranschlusses,
- Fig. 6: eine schematische Darstellung eines ANCP-Datenrahmens, und
- Fig. 7: eine schematische Darstellung eines an die Erfindung angepassten ANCP-Datenrahmens.

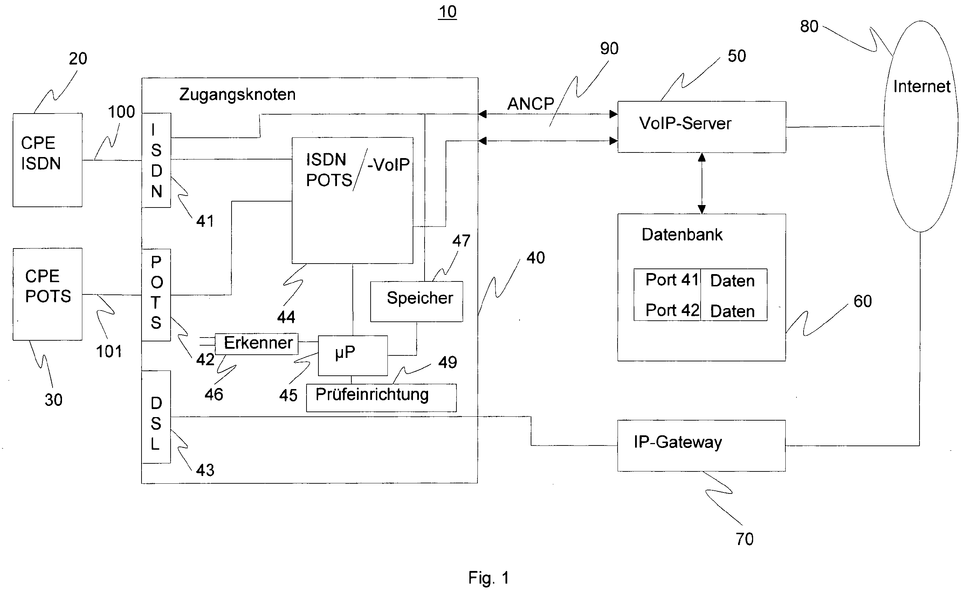

Fig. 1 zeigt ein beispielhaftes Breitbandzugangssystem 10, welches einen Zugangsknoten 40, auch Zugangsmultiplexer genannt, aufweist, der über eine IP-basierte Kommunikationsverbindung eines IP-basierten Netzes 90 mit einem VoIP-Server verbunden werden kann. Wie nachfolgend noch näher erläutert wird, werden zwischen dem Zugangsknoten 40 und dem VoIP-Server 50 mittels eines bestimmten Signalisierungsprotokolls Signalisierungs- und Steuerdaten ausgetauscht. Der VoIP-Server 50 ist beispielsweise mit dem Internet 80 verbunden. Der Zugangsknoten 40 ist über eine weitere IP-Verbindung über das IP-basierte Netz 90 mit einem IP-Gateway 70 verbunden, welches in an sich bekannter Weise dazu dient, breitbandige Daten von einem nicht dargestellten Endgerät über den Zugangsknoten 40 in das Internet zu übertragen oder darüber zu empfangen. Der Zugangsknoten 40 enthält mehrere Steckplätze (nicht dargestellt), in die Leiterkarten eingesteckt werden können. Die Leiterkarten weisen mehrere Ports auf, welche jeweils eine Teilnehmer-Anschlussleitung abschließen. Im vorliegenden Beispiel sei angenommen, dass drei Leiterkarten im Zugangsknoten 40 eingesteckt sind. Jede Leiterkarte kann mehrere Schnittstellen aufweisen, an die jeweils eine Teilnehmer-Anschlussleitung angeschlossen werden kann. Der leichteren Darstellung wegen ist in Fig. 1 lediglich ein Port 41 der ersten Leiterkarte dargestellt, der, wie nachfolgend noch näher beschrieben wird, als ISDN-Sprachschnittstelle konfigurierbar ist. Hinsichtlich der zweiten Leiterkarte ist lediglich ein Port 42 dargestellt, der im vorliegenden Ausführungsbeispiel als POTS-Sprachschnittstelle konfigurierbar ist. Die dritte Leiterkarte ist schematisch durch einen Port 43 dargestellt, der als breitbandige Datenschnittstelle implementiert ist. Wie Fig. 1 weiter zeigt, ist eine ISDN-Teilnehmer-Anschlussleitung 100 an dem Port 41 angeschlossen. Teilnehmerseitig ist die Teilnehmer-Anschlussleitung 100 beispielsweise mit einem ISDN-Telefon 20 abgeschlossen. Im Bereich von breitbandigen Zugangsnetzen werden die Teilnehmer-Endgeräte auch als Customer Premise Equipment (CPE) bezeichnet. An den Port 42 der zweiten Leiterkarte ist beispielsweise eine analoge Teilnehmer-Anschlussleitung 101 angeschlossen, die teilnehmerseitig mit einem analogen herkömmlichen Telefon 30 verbunden ist. Im vorliegenden Beispiel ist Port 43 der dritten Leiterkarte nicht beschaltet. Der Zugangsknoten 40 weist weiterhin einen Umsetzer 44 auf, der die von den Ports 41 und 42 kommenden Sprachsignale in VoIP-Signale und in umgekehrter Richtung empfangene VoIP-Signale in ISDN-Sprachsignale für den Port 41 und in analoge Sprachsignale für den Port 42 umsetzen kann. Alternativ kann eine solche Umsetzereinrichtung auch auf jeder Leiterkarte implementiert sein. Weiterhin ist in dem Zugangsknoten eine Erkennungseinrichtung 46 implementiert, die erkennen kann, ob Port 41 oder 42 mit einem Teilnehmer-Endgerät verbunden worden ist. Ein Prüfeinrichtzung 49 dient dazu, den Zustand einer teilnehmerseitig abgeschlossenen Teilnehmer-Anschlussleitung zu prüfen.

Für den Fall, dass es sich bei der Teilnehmer-Anschlussleitung um eine digitale Teilnehmer-Anschlussleitung (DSL) handelt, über die sowohl schmalbandige Sprachsignale als auch breitbandige Datensignale übertragen werden können, weist der Zugangsknoten 40 Funktionalitäten eines herkömmlichen DSLAM auf. Hierzu gehört beispielsweise ein Splitter, der die schmalbandigen Sprachsignale, gleichgültig ob es sich um POTS- oder ISDN-Sprachsignale handelt, dem Sprachport der jeweiligen Leiterkarte und breitbandige Datensignale dem entsprechenden Datenport zuführt. Eine programmierbare Steuereinheit 45 überwacht und steuert den Betrieb des Zugangsknotens 40. Die Steuereinheit 45 dient beispielsweise dazu, unter Anwendung des Session Initiation Protocol eine VoIP-Verbindung zwischen dem Knoten 40 und dem VoIP-Server 50 aufzubauen, wie dies in Fig. 1 dargestellt ist. Weiterhin kann der Zugangsknoten 40 selbst und/oder jede Leiterkarte eine Speichereinrichtung aufweisen, in der Identifikationssdaten der jeweiligen Ports abgelegt sind. Im vorliegenden Beispiel ist ein lokaler Speicher 47 vorgesehen. Die Identifikationssdaten eines Ports enthalten die Nummer des Steckplatzes, in der die Leiterkarte eingesetzt ist, sowie die Portnummer. Der Zugangsknoten 40 und/oder die Leiterkarten können jeweils eine weitere Speichereinrichtung, in die teilnehmerbezogene Daten abgelegt werden können. Wie noch gezeigt wird, werden diese Daten zur automatischen Konfiguration der Ports 41 und 42, welche Sprachschnittstellen darstellen, verwendet.

Die teilnehmerbezogenen Daten sind in einer Speichereinrichtung 60 hinterlegt, die dem VoIP-Server 50 zugeordnet sind. Die Speichereinrichtung kann eine externe Datenbank 60, ein Speichernetz oder eine lokale Speichereinrichtung innerhalb des VoIP-Servers 50 sein. Im vorliegenden Beispiel ist die Speichereinrichtung als externe Datenbank 60 ausgebildet und mit dem VoIP-Server 50 verbunden. In der Datenbank 60 ist eine Datentabelle hinterlegt, die zum einen die Identifikationssdaten der Ports 41 und 42 und darüber hinaus teilnehmerbezogene Daten enthält, die dem jeweiligen Port beziehungsweise dem an den jeweiligen Ports anschließbaren Teilnehmeranschluss zugeordnet sind. Insbesondere sind in der Datenbank 60 die teilnehmerbezogenen Daten des Teilnehmeranschlusses gespeichert, an den das ISDN-Telefons 20 angeschlossen ist. Die teilnehmerbezogenen Daten enthalten beispielsweise die ISDN-Mehrfachrufnummer des mit der Teilnehmer-Anschlussleitung verbundenen Teilnehmeranschlusses. Zudem können sie eine entsprechende SIP-Identifizierung, unter der der Port 41 des Zugangsknoten vom VoIP-Server ansprechbar ist, sowie die Dienstleistungsmerkmale enthalten, die für den Teilnehmeranschluss am Zugangsknoten 40 eingerichtet und aktiviert werden können. Auch die teilnehmerbezogenen Daten des analogen Teilnehmeranschlusses, der die Teilnehmer-Anschlussleitung 101 abschließt, sind in der Datenbank 60 hinterlegt und den Identifikationssdaten des Ports 42 zugeordnet. Diese teilnehmerbezogenen Daten enthalten Angaben über den Anschlusstyp, an dem das analoge Telefon 30 angeschlossen worden, eine E.164 Teilnehmerrufnummer, einen SIP-Identifizierer sowie die Leistungsmerkmale, die dem analogen Teilnehmeranschluss zugeordnet werden sollen.

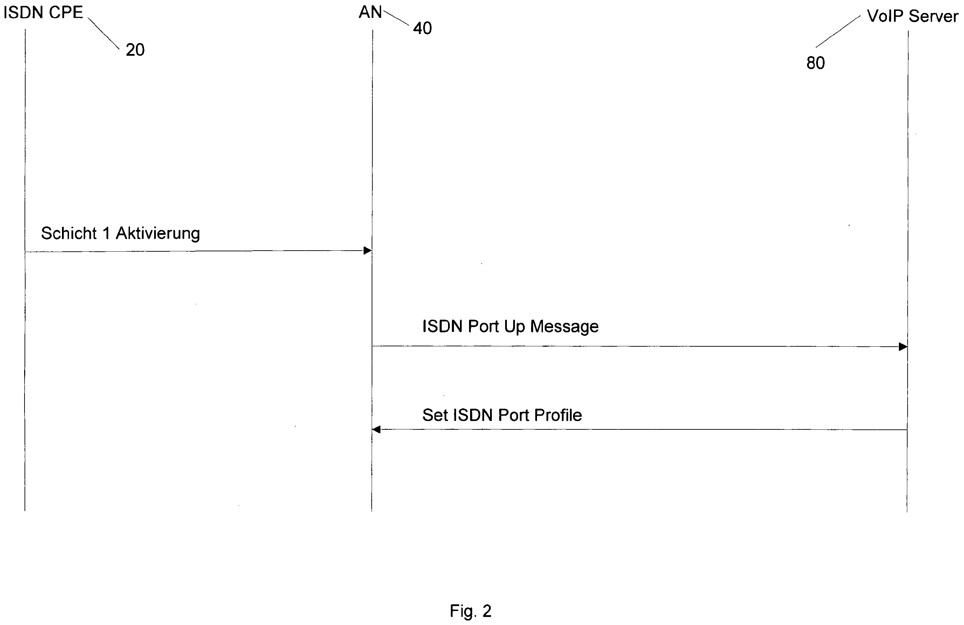

Nachfolgend wird die Funktionsweise des in Fig. 1 dargestellten beispielhaften breitbandigen Zugangssystems 10 in Verbindung mit den Figuren 2 bis 7 näher erläutert.

Angenommen sei nunmehr, dass der Zugangsknoten 40 erstmals in Betrieb genommen werden soll und die Telefone 20 und 30 noch nicht am Zugangsknoten 40 angeschlossen sind. Der Zugangsknoten 40 kennt somit zum gegenwärtigen Zeitpunkt weder die Zugangsdaten noch die Dienstleistungsmerkmale, die den Telefonen 20 und 30 zugeordnet werden sollen. Allerdings ist die entsprechende Zuordnung der teilnehmerbezogenen Daten hinsichtlich der Ports 41 und 42 in der Datenbank 60 hinterlegt.

Nunmehr sei angenommen, dass das ISDN-Telefon 20 an die Teilnehmer-Anschlussleitung 100 und somit an den Port 41 des Zugangsknotens angeschaltet worden ist. Sobald die mit den Ports 41 und 42 verbundene Erkennereinrichtung 46 feststellt, dass die Anschlussleitung 100 mit dem ISDN-Telefon 20 abgeschlossen worden ist, signalisiert die Erkennungseinrichtung 46 dies der Steuereinrichtung 45. Die Erkennungseinrichtung 46 ist derart ausgebildet, dass sie eine von dem ISDN-Telefon 20 oder dem Teilnehmeranschluss übertragene Signalisierungsnachricht empfangen und auswerten kann. Aus der Signalisierungsnachricht entnimmt die Erkennungseinrichtung 46 die Information, dass die Teilnehmer-Anschlussleitung 100 mit dem ISDN-Gerät 20 abgeschlossen worden ist.

Die Steuereinrichtung 45 liest daraufhin eine entsprechende ISDN-Port-Up-Nachricht aus dem Speicher 47 aus, die neben der Steckplatznummer und der Portnummer des Ports 41 auch eine Identifikation des Zugangsknotens 40 enthält. Unter Steuerung eines IP-basierten Signalisierungsprotokolls veranlasst die Steuereinrichtung 45 den Zugangsknoten 40, eine IP-basierte Signalisierungsverbindung über das Netz 90 zum VoIP-Server 50 aufzubauen, über die die ISDN-Port-Up-Nachricht übertragen wird. Anhand der empfangenen ISDN-Port-Up-Nachricht liest der VoIP-Server 50 die zum Port 41 gehörenden teilnehmerbezogenen Daten aus und überträgt diese Daten als Set-ISDN-Port-Profil über die aufgebaute IP-basierte Signalisierungsverbindung zum Zugangsknoten 40, wie dies in Fig. 2 schematisch dargestellt ist. Das Set-ISDN-Port-Profil wird vom Zugangsknoten 40 verwendet, um den Port 41 als ISDN-Sprachschnittstelle zu konfigurieren. Hierzu wird dem Port 41 die Teilnehmerrufnummer des ISDN-Gerätes 20 als auch die entsprechende SIP-Identifizierung zugeordnet. Ferner werden alle Dienstleistungsmerkmal, die für den Teilnehmeranschluss, an dem das ISDN-Telefon 20 angeschlossen ist, bestimmt sind, aktiviert. Das dem ISDN-Telefon 20 zugeordnete Set-ISDN-Port-Profil wird in einem lokalen Speicher des Zugangsknotens 40 oder auf der Leiterkarte, auf der Port 41 implementiert ist, abgelegt.

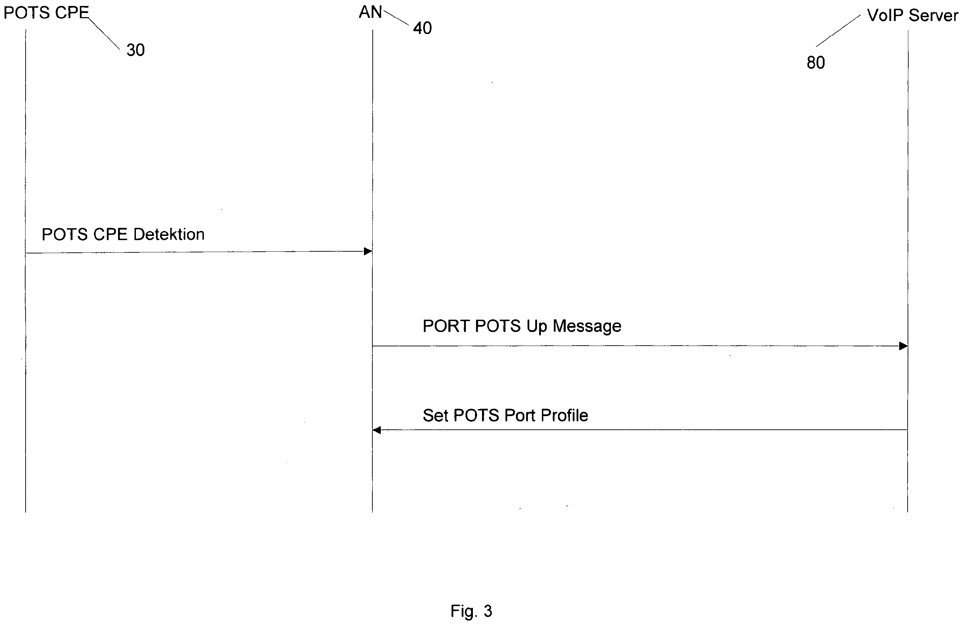

Nunmehr sei angenommen, dass die Teilnehmer-Anschlussleitung 100 mit dem analogen Telefon 30 abgeschlossen worden ist. Dies erkennt die Erkennungseinrichtung 46 beispielsweise durch eine Spannungs- oder Stromänderung am Port 42. Diesen Zustand meldet die Erkennungseinrichtung 46 der Steuereinrichtung 45, die daraufhin eine POTS-PORT-Up-Nachricht aus den Speicher 47 ausliest und über die aufgebaute IP-basierte Signalisierungsverbindung des Netzes 90 zum VoIP-Server 50 überträgt. Die POTS-PORT-Up-Nachricht enthält wiederum die Steckplatznummer, die Portnummer des Ports 42 und eine Identifikation des Zugangsknotens 40. Unter Ansprechen auf die POTS-PORT-Up-Nachricht liest der VoIP-Server 50 die zum Port 42 gehörenden teilnehmerbezogenen Daten aus und überträgt sie zum Zugangsknoten 40 als Set-POTS-Port-Profil, wie dies in Fig. 3 dargestellt ist. Das Set-POTS-Port-Profil wird in einem lokalen Speicher (nicht dargestellt) des Zugangsknotens 40 oder auf einem Speicher der zweiten Leiterkarte abgelegt. Die in dem Profil enthaltenen Informationen werden zu Konfiguration des Ports 42 als POTS-Sprachschnittstelle verwendet. Gleichzeitig werden die dem Teilnehmeranschluss, an dem das analoge Telefon 30 angeschlossen ist, zugeordneten Leistungsmerkmale im Zugangsknoten 40 aktiviert.

Nunmehr können VoIP-Sprachverbindungen zu dem ISDN-Telefon 20 und dem analogen Telefon 30 aufgebaut werden. Die Steuereinrichtung 45 baut unter Anwendung beispielsweise des Session Initiation Protocol eine VoIP-Verbindung über das Netz 90 vom Zugangsknoten 40 zum VoIP-Server 50 auf.

Über diese VoIP-Verbindung können VoIP-Sprachsignale vom Zugangsknoten 40 zum VoIP-Server 50 übertragen werden. Der VoIP-Server 50 überträgt die VoIP-Sprachsignale über das Internet 80 zum Ziel. In ähnlicher Weise werden die über das Internet 80 übertragenen VoIP-Sprachsignale, die für das ISDN-Telefon 30 oder das Telefon 30 bestimmt sind, vom den VoIP-Server 50 zum Zugangsknoten 40 übertragen.

Die beispielsweise vom ISDN-Telefon 20 kommenden Sprachsignale werden über den als ISDN-Sprachschnittstelle konfigurierten Port 41 der Umsetzungseinrichtung 44 zugeführt, die die ISDN-Sprachsignale in VoIP-Sprachsignale umsetzt. In umgekehrter Richtung werden die für das ISDN-Telefon bestimmten VoiP-Sprachsignale in der Umsetzungseinrichtung 44 in ISDN-Sprachsignale umgesetzt. Die VoIP-Sprachsignale werden zusammen mit der dem Port 41 zugeordneten SIP-Identifizierung in IP-Paketen vom VoIP-Server 50 zum Zugangsknoten 40 übertragen. Anhand der SIP-Identifizierung erkennt die Steuereinrichtung 45, dass die empfangenen VoIP-Sprachsignale für das ISDN-Telefon 20 bestimmt sind. Die im Umsetzer 44 erzeugten ISDN-Sprachsignale werden dann über den Port 41 und die Teilnehmer-Anschlussleitung 100 zum ISDN-Gerät 20 übertragen. In ähnlicher Weise können Sprachsignale vom analogen Telefon 30 als VoIP-Sprachsignale ins Internet 80 übertragen und über das Internet 80 empfangene VoiP-Signale als analoge Sprachsignale zum analogen Telefon 30 übertragen werden.

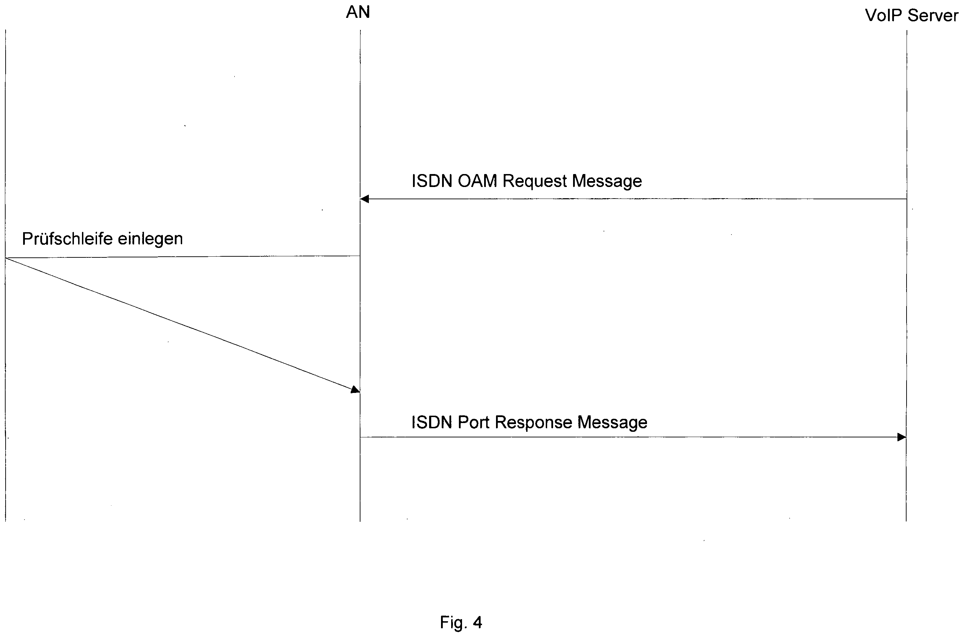

Der Zugangsknoten 40 ist ferner in der Lage, zentral gesteuert beispielsweise den Zustand der Anschlussleitung 100 zu prüfen. Hierzu sendet der VoIP-Server 50 eine sogenannte ISDN-OAM-Request-Meldung (OAM = Operation in Maintenance) pber die IP-basierte Signalisierungsverbindung zum Zugangsknoten 40. Die Steuereinrichtung 45 aktiviert unter Ansprechen auf die empfangene ISDN-OAM-Request-Meldung die Prüfeinrichtung 49, die eine an sich bekannte Prüfung des Zustandes der ISDN-Teilnehmeranschlussleitung 100 durchführt. Hierzu wird beispielsweise ein Prüfwort über den Port 41 und die Teilnehmer-Anschlussleitung 100 zum ISDN-Gerät 20 übertragen. Anhand des vom ISDN-Gerätes 20 empfangenen Antwortsignals erkennt die Prüfeinrichtung 49 den ordnungsgemäßen oder fehlerhaften Zustand der Anschlussleitung 100. In einer ISDN-Port-Response-Meldung überträgt der Zugangsknoten 40 dann den Zustand der Teilnehmer-Anschlussleitung 100 über die aufgebaute IP-basierte Signalisierungsverbindung zum VoIP-Server 50. Dieser Signalisierungsaustausch ist in Fig. 4 dargestellt.

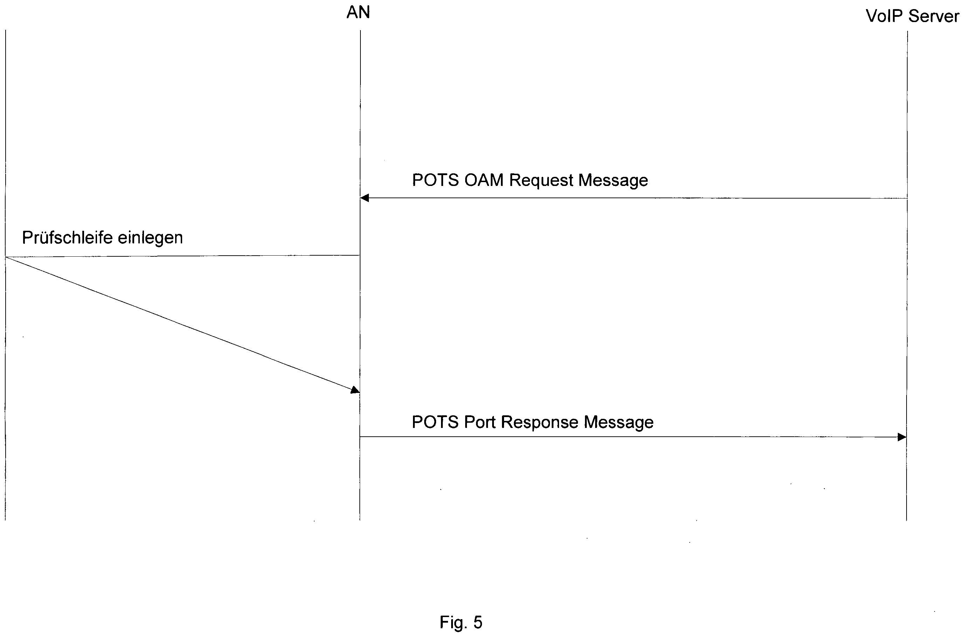

In ähnlicher Weise kann der Zugangsknoten 40 eine Schleifenprüfung hinsichtlich der analogen Teilnehmer-Anschlussleitung 101 durchführen. Hierzu erzeugt der VoIP-Server 50 eine entsprechende POTS-OAM-Request-Meldung, die unter anderem die SIP-Identifizierung und die Teilnehmerrufnummer, welche dem Port 42 zugeordnet worden sind, enthält. Unter Ansprechen auf die empfangene POTS-OAM-Request-Meldung führt die Prüfeinrichtung 49 am Port 42 eine Prüfung der Schleife zwischen dem Port 42 und der an der Teilnehmer-Anschlussleitung 101 angeschlossenen analogen Endeinrichtung 30 durch. Beispielsweise misst die Prüfeinrichtung 49 Strom- oder Spannungsänderung am Port 42. Derartige Schleifenprüfverfahren sind jedoch hinlänglich bekannt und nicht Gegenstand der Erfindung. Den ermittelten Leitungszustand überträgt die Prüfeinrichtung 49 in einer POTS-Port-response-Meldung über die aufgebaute IP-basierte Signalisierungsverbindung 90 zum VoIP-Server 50. Der entsprechende Nachrichtenfluss ist in Fig. 5 näher erläutert.

Angemerkt sei noch, dass die im Port 43 ankommenden breitbandigen Daten vom Zugangsknoten 40 in herkömmlicher Weise zum IP-Gateway 70 übertragen werden, der die Daten dann wiederum dem Internet 80 zuführt.

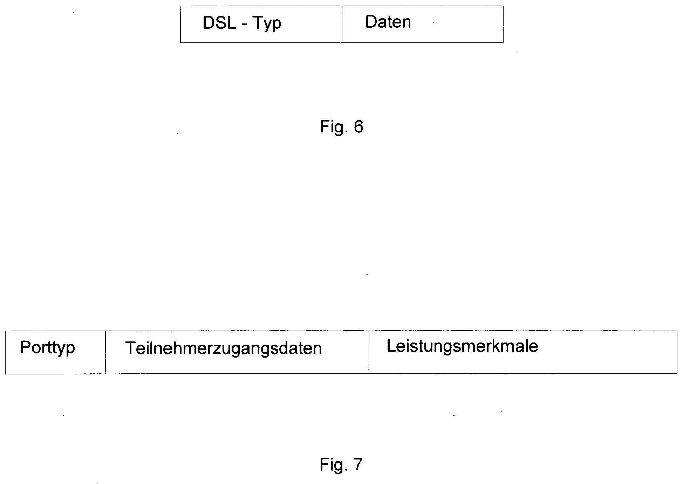

Ein anwendbares Signalisierungsprotokoll kann beispielsweise auf dem ANCP aufbauen, welches zum Austausch von Signalisierungsdaten zwischen einem IP-Gateway und einem als DSLAM implementierten Zugangsmultiplexer angewendet werden kann. Der schematische Aufbau eines ANCP-Datenrahmens ist in Fig. 6 dargestellt. Danach enthält der ANCP-Datenrahmen ein Feld für den digitalen Teilnehmer-Anschlussleitungstyp. Hierbei kann es sich beispielsweise um den ADSL-, VDSL oder den SDSL-Typ handeln. Weiterhin ist ein Datenfeld vorgesehen, in dem beispielsweise die Länge des Datenrahmens enthalten ist. Fig. 7 zeigt einen auf dem ANCP-Datenrahmen aufbauenden Datenrahmen, der anstelle eines Feldes für den DSL-Typ ein Feld für den Port-Typ enthält. Der Port-Typ kann beispielsweise einen ISDN-Anschluss, einen POTS-Anschluss oder einen DSL-Anschluss spezifizieren. Weiterhin ist ein Feld für Teilnehmerzugangsdaten vorgesehen, in dem unter anderem die Rufnummer und eine SIP-Identifizierung für einen Teilnehmeranschluss hinterlegt sind. Ein weiteres Datenfeld ist vorgesehen, in dem die einem bestimmten Teilnehmeranschluss zugeordneten Leistungsmerkmale definiert sind.

## Patentansprüche

1. Verfahren zur teilnehmerbezogenen Schnittstellensteuerung eines Zugangsknoten (40), der über ein IP-basiertes Kommunikationsnetz (90) mit einem VoIP-Server (50) verbunden ist, wobei an den Zugangsknoten (40) mehrere Teilnehmer-Endgeräte (20, 30) über Teilnehmer-Anschlussleitungen (100, 101) angeschlossen werden können, mit folgenden Schritten:
Speichern teilnehmerbezogener Daten in einer dem VoIP-Server (50) zugeordneten Speichereinrichtung (60), wobei die Daten zur Konfiguration wenigstens einer Sprachschnittstelle des Zugangsknoten dienen;
Ermitteln durch den Zugangsknoten (40), ob ein Teilnehmer-Endgerät (20, 30) an einer Schnittstelle (41, 42) des Zugangsknoten (40) angeschlossen worden ist;
wenn ja, Übertragen von der Schnittstelle zugeordneten Identifizierungsdaten vom Zugangsknoten (40) zum VoIP-Server (50) unter Verwendung eines IP-basierten Signalisierungsprotokolls;
unter Ansprechen auf die empfangenen Schnittstellen-Identifikationsdaten Übertragen der für diese Schnittstelle (41, 42) hinterlegten teilnehmerbezogenen Daten vom VoIP-Server (50) zum Zugangsknoten (40) unter Verwendung des IP-basierten Signalisierungsprotokolls;
Konfigurieren des Zugangsknoten (40) unter Verwendung der teilnehmerbezogenen Daten derart, dass die ermittelte Schnittstelle (41, 42) als Sprachschnittstelle betrieben wird.

2. Verfahren nach Anspruch 1,
**dadurch gekennzeichnet, dass**
der Zugangsknoten (40) mehrere Schnittstellen (41, 42) aufweist, die in Abhängigkeit von den in der Speichereinrichtung (60) hinterlegten teilnehmerbezogenen Daten als analoge oder digitale Sprachschnittstellen konfiguriert werden.

3. Verfahren nach einem der vorstehenden Ansprüche,
**dadurch gekennzeichnet, dass**
die gespeicherten teilnehmerbezogenen Daten teilnehmerrelevante Zugangsdaten, insbesondere eine Teilnehmerrufnummer und einen SIP-Identifizierer, sowie wenigstens ein Dienstleistungsmerkmal wenigstens eines analogen oder digitalen Teilnehmeranschlusses enthalten.

4. Verfahren nach einem der vorstehenden Ansprüche,
**dadurch gekennzeichnet, dass**
die von einem analogen oder digitalen Teilnehmer-Endgerät (20, 30) kommenden Sprachsignale im Zugangsknoten (40) in VoIP-Signale zur Übertragung zum VoIP-Server (50) umgesetzt werden, und dass die vom VoIP-Server (50) kommenden VoIP-Signale im Zugangsknoten (40) in Sprachsignale zur Übertragung an ein analoges oder digitales Teilnehmer-Endgerät (20, 30) umgesetzt werden.

5. Verfahren nach einem der vorstehenden Ansprüche,
**dadurch gekennzeichnet, dass**
die Schnittstellen-Identifizierungsdaten die Portnummer und Steckplatznummer der ermittelten Schnittstelle enthalten.

6. Verfahren nach einem der vorstehenden Ansprüche,
**dadurch gekennzeichnet, dass**
unter Steuerung des Zugangsknoten (40) eine VoIP-Verbindung zwischen dem Zugangsknoten (40) und dem VoIP-Server (50) aufgebaut wird, über die Sprachsignale zwischen dem an der ermittelten Schnittstelle (41, 42) angeschlossenen Teilnehmer-Endgerät (20, 30) und dem VoIP-Server (50) ausgetauscht werden.

7. Verfahren nach einem der vorstehenden Ansprüche, **gekennzeichnet durch** folgende Schritte:
Übertragen eines Steuerbefehls unter Verwendung des IP-basierten Signalisierungsprotokolls von dem VoIP-Server (50) zum Zugangsknoten (40) zum Aktivieren einer Prüfung der Teilnehmer-Anschlussleitung, die durch den Zugangsknoten und das Teilnehmer-Endgerät(20, 30) abgeschlossen ist;
Prüfen der durch den Zugangsknoten (40) und das Teilnehmer-Endgerät (20, 30) abgeschlossenen Teilnehmer-Anschlussleitung (100, 101), und Übertragen einer Information, die auf den Zustand der Teilnehmer-Anschlussleitung hinweist, unter Verwendung des IP-basierten Signaliserungsprotokolls vom Zugangsknoten (40) zum VoIP-Server (50).

8. Verfahren nach einem der vorstehenden Ansprüche,
**dadurch gekennzeichnet, dass**
als IP-basierte Signalisierungsprotokoll ein modifiziertes Access Node Control Protocol (ANCP) verwendet wird.

9. Breitbandiges Zugangssystem (10) zur teilnehmerbezogenen Schnittstellensteuerung eines Zugangsknoten, mit
wenigstens einem fernsteuerbaren Zugangsknoten (40), der über ein IP-basiertes Kommunikationsnetz (90) mit einem VoIP-Server (50) verbunden ist,
wenigstens eine analoge oder digitale Teilnehmer-Endeinrichtung (20, 30), die über eine Teilnehmer-Anschlussleitung (100, 101) an den Zugangsknoten (40) angeschlossen werden kann,
eine dem VoIP-Server (50) zugeordneten Speichereinrichtung (60), in der teilnehmerbezogene Daten zur Konfiguration der wenigstens einen Sprachschnittstelle (41, 42) des Zugangsknoten (40) gespeichert sind, wobei
der Zugangsknoten (40) aufweist:
wenigstens eine Sprachschnittstelle (41, 42), eine Speichereinrichtung (47) zum Speichern einer Identifizierungsinformation über die Sprachschnittstelle (41, 42),
eine Einrichtung (46)zum Erkennen, ob an der Sprachschnittstelle (41, 42) eine Teilnehmer-Endeinrichtung (20, 30) angeschlossen ist,
eine Einrichtung zum Austauschen von Signalisierungsinformationen mit dem VoIP-Server (50) unter Verwendung eines IP-basierten Signalisierungsprotokolls,
eine Einrichtung zum Konfigurieren der Sprachschnittstelle unter Ansprechen auf die der Sprachschnittstelle zugeordneten teilnehmerbezogenen Daten, wobei
der VoIP-Server (50) zum Auslesen und Übertragen von teilnehmerbezogenen Daten zum Zugangsknoten (40) unter Ansprechen auf eine empfangene Identifizierungsinformation einer Sprachschnittstelle des Zugangsknotens ausgebildet ist.

10. Breitbandiges Zugangssystem nach Anspruch 9,
**dadurch gekennzeichnet, dass**
der Zugangsknoten (40) derart konfigurierbar ist, dass die Sprachschnittstelle zum Übertragen und Empfangen von Sprachsignalen zu bzw. von einem digitalen oder analogen Teilnehmeranschluss fähig ist.

11. Breitbandiges Zugangssystem nach Anspruch 9 oder 10,
**dadurch gekennzeichnet, dass**
der Zugangsknoten (40) eine Umsetzungseinrichtung (44) zum Umsetzen von Sprachsignalen, die von einer analogen oder digitalen Teilnehmer-Endeinrichtung (20, 30) kommen, in VoIP-Signale und zum Umsetzen von VoIP-Signalen in Sprachsignale zur Übertragung zu einer analogen oder digitalen Teilnehmer-Endeinrichtung (20, 30) aufweist.

12. Breitbandiges Zugangssystem nach Anspruch 9, 10 oder 11,
**dadurch gekennzeichnet, dass**
der Zugangsknoten (40) eine Prüfeinrichtung (49) aufweist, die unter Ansprechen auf einen Steuerbefehl des VoIP-Servers (50) eine Prüfung der Teilnehmer-Anschlussleitung (100, 101), die durch den Zugangsknoten (40) und einen analogen oder digitalen Teilnehmer-Endeinrichtung (20, 30) abgeschlossen ist, durchführt.

13. Breitbandiges Zugangssystem nach einem der Ansprüche 9 bis 12,
**dadurch gekennzeichnet, dass**
der Zugangsknoten (40) wenigstens eine breitbandige Datenschnittstelle (43) aufweist und über eine IP-basierte Verbindung mit einem IP-Gateway (70) verbunden werden kann.

14. Breitbandiges Zugangssystem nach einem der Ansprüche 9 bis 13,
**dadurch gekennzeichnet, dass**
der Zugangsknoten (40) eine Steuereinrichtung (45) aufweist, die zum Herstellen einer IP-basierten Sprachkommunikationsverbindung zum VoIP-Server (50) ausgebildet ist.

15. Zugangsknoten (40) zum Einsatz in einem breitbandigen Zugangssystem, mit
wenigstens einer Sprachschnittstelle (41, 42),
einer Speichereinrichtung (47) zum Speichern einer Identifizierungsinformation über die Sprachschnittstelle (100, 101),
einer Einrichtung zum Erkennen (46), ob an der Sprachschnittstelle (100, 101) eine Teilnehmer-Endeinrichtung (20, 30) angeschlossen ist,
einer Einrichtung zum Austauschen von Signalisierungsinformationen mit einem VoIP-Server (50) unter Verwendung eines IP-basierten Signalisierungsprotokolls,
einer Einrichtung zum Fernsteuern der Sprachschnittstelle unter Ansprechen auf der Sprachschnittstelle zugeordnete teilnehmerbezogene Daten.

16. Zugangsknoten nach Anspruch 15,
**gekennzeichnet durch**
eine Umsetzungseinrichtung (44) zum Umsetzen von Sprachsignalen, die von einer analogen oder digitalen Teilnehmer-Endeinrichtung (20, 30) kommen, in VoIP-Signale und zum Umsetzen von VoIP-Signalen in Sprachsignale zur Übertragung zu einer analogen oder digitalen Teilnehmer-Endeinrichtung (20,30).

17. Zugangsknoten nach Anspruch 15 oder 16,
**gekennzeichnet durch**
eine fernsteuerbare Prüfeinrichtung (49), die unter Ansprechen auf einen Steuerbefehl von einem VoIP-Server (50) eine Prüfung einer Teilnehmer-Anschlussleitung (100, 101), die von Zugangsknoten (40) und einer analogen oder digitalen Teilnehmer-Endeinrichtung (20, 30)abgeschlossen ist, durchführt.

## Claims

1. A method for subscriber-related interface control of an access node (40) which is connected to a VoIP server (50) via an IP-based communications network (90), wherein a plurality of subscriber terminal devices (20, 30) can be connected to the access node (40) via subscriber connection lines (100, 101), with the following steps:
Storing subscriber-related data in a storage device (60) assigned to the VoIP server (50), the data serving to configure at least one voice interface of the access node;
determining by the access node (40) whether a subscriber terminal device (20, 30) has been connected to an interface (41, 42) of the access node (40);
if so, transmitting identification data associated with the interface from the access node (40) to the VoIP server (50) using an IP-based signaling protocol;
in response to the received interface identification data, transmitting the subscriber-related data stored for this interface (41, 42) from the VoIP server (50) to the access node (40) using the IP-based signaling protocol;
configuring the access node (40) using the subscriber-related data in such a way that the determined interface (41, 42) is operated as a voice interface.

2. The method according to claim 1, **characterized in that** the access node (40) has a plurality of interfaces (41, 42) which are configured as analog or digital voice interfaces depending on the subscriber-related data stored in the storage device (60).

3. The method according to any one of the preceding claims, **characterized in that**
the stored subscriber-related data contain subscriber-relevant access data, in particular a subscriber call number and a SIP identifier, as well as at least one service feature of at least one analog or digital subscriber connection.

4. The method according to any one of the preceding claims, **characterized in that**
the voice signals coming from an analog or digital subscriber terminal device (20, 30) are converted in the access node (40) into VoIP signals for transmission to the VoIP server (50), and **in that** the VoIP signals coming from the VoIP server (50) are converted in the access node (40) into voice signals for transmission to an analog or digital subscriber terminal device (20, 30).

5. The method according to any one of the preceding claims, **characterized in that**
the interface identification data contains the port number and slot number of the determined interface.

6. The method according to any one of the preceding claims, **characterized in that**
a VoIP connection is established between the access node (40) and the VoIP server (50) under control of the access node (40), via which VoIP signals are exchanged between the subscriber terminal device (20, 30) connected to the determined interface (41, 42) and the VoIP server (50).

7. The method according to any one of the preceding claims, **characterized by** the following steps:
transmitting a control command using the IP-based signaling protocol from the VoIP server (50) to the access node (40) for activating a check of the subscriber connection line, said subscriber connection line being terminated by the access node and the subscriber terminal device (20, 30) ;
checking the subscriber connection line (100, 101) terminated by the access node (40) and the subscriber terminal device (20, 30), and
transmitting information indicative of the state of the subscriber connection line using the IP-based signaling protocol from the access node (40) to the VoIP server (50) .

8. The method according to any one of the preceding claims, **characterized in that**
a modified Access Node Control Protocol (ANCP) is used as the IP-based signaling protocol.

9. A broadband access system (10) for subscriber-related interface control of an access node, comprising at least one remotely controllable access node (40) connected to a VoIP server (50) via an IP-based communication network (90),
at least one analog or digital subscriber terminal device (20, 30) which can be connected to the access node (40) via a subscriber connection line (100, 101),
a storage device (60) assigned to the VoIP server (50), in which subscriber-related data for configuring the at least one voice interface (41, 42) of the access node (40) are stored, wherein
said access node (40) comprises:
at least one voice interface (41, 42),
a storage device (47) for storing identification information regarding the voice interface (41, 42), means (46) for detecting whether a subscriber terminal device (20, 30) is connected to the voice interface (41, 42),
means for exchanging signaling information with the VoIP server (50) using an IP-based signaling protocol,
means for configuring the voice interface in response to the subscriber-related data assigned to the voice interface, wherein
the VoIP server (50) is adapted to read and transmit subscriber-related data to the access node (40) in response to received identification information of a voice interface of the access node.

10. The broadband access system according to claim 9, **characterized in that**
the access node (40) is configurable in such a way that the voice interface is capable of transmitting and receiving voice signals respectively to and from a digital or analog subscriber line.

11. The broadband access system according to claim 9 or 10, **characterized in that**
the access node (40) has conversion means (44) for converting voice signals coming from an analog or digital subscriber terminal device (20, 30) into VoIP signals and for converting VoIP signals into voice signals for transmission to an analog or digital subscriber terminal device (20, 30).

12. The broadband access system according to claim 9, 10 or 11, **characterized in that**
the access node (40) comprises checking means (49) which, in response to a control command of the VoIP server (50), performs a check of the subscriber connection line (100, 101), said subscriber connection line (100, 101) being terminated by the access node (40) and an analog or digital subscriber terminal device (20, 30).

13. The broadband access system according to any one of claims 9 to 12, **characterized in that**
the access node (40) has at least one broadband data interface (43) and can be connected to an IP gateway (70) via an IP-based connection.

14. The broadband access system according to any one of claims 9 to 13, **characterized in that**
the access node (40) comprises a controller (45) adapted to establish an IP-based voice communication link to the VoIP server (50).

15. An access node (40) for use in a broadband access system, comprising
at least one voice interface (41, 42),
a storage device (47) for storing identification information regarding the voice interface (100, 101), means for detecting (46) whether a subscriber terminal device (20, 30) is connected to the voice interface (100, 101),
means for exchanging signaling information with a VoIP server (50) using an IP-based signaling protocol, means for remotely controlling the voice interface in response to subscriber-related data assigned to the voice interface.

16. The access node according to claim 15, **characterized by** conversion means (44) for converting voice signals coming from an analog or digital subscriber terminal device (20, 30) into VoIP signals and for converting VoIP signals into voice signals for transmission to an analog or digital subscriber terminal device (20, 30).

17. The access node according to claim 15 or 16, **characterized by**
remotely controllable checking means (49) which, in response to a control command from a VoIP server (50), performs a check of a subscriber connection line (100, 101), said subscriber connection line (100, 101) being terminated by the access node (40) and an analog or digital subscriber terminal device (20, 30).

## Revendications

1. Procédé de commande d'interface, orientée abonné, d'un noeud d'accès (40) qui est connecté à un serveur VoIP (50) par l'intermédiaire d'un réseau de communication (90) basé sur IP, où plusieurs terminaux d'abonné (20, 30) peuvent être raccordés au noeud d'accès (40) par l'intermédiaire de lignes de raccordement d'abonné (100, 101), comprenant les étapes suivantes :
mettre en mémoire des données orientées abonné dans un dispositif mémoire (60) affecté au serveur VoIP (50), où les données servent à la configuration d'au moins une interface vocale du noeud d'accès ;
déterminer par l'intermédiaire du noeud d'accès (40) si un terminal d'abonné (20, 30) a été raccordé à une interface (41, 42) du noeud d'accès (40) ;
si oui, transmettre les données d'identification affectées par l'interface du noeud d'accès (40) au serveur VoIP (50) au moyen d'un protocole de signalisation basé sur IP ;
en réponse aux données d'identification d'interface reçues, transmettre les données orientées abonné mises en mémoire pour cette interface (41, 42) du serveur VoIP (50) au noeud d'accès (40) au moyen du protocole de signalisation basé sur IP ;
configurer le noeud d'accès (40) au moyen des données orientées abonné de telle sorte que l'interface (41, 42) déterminée fonctionne en tant qu'interface vocale.

2. Procédé selon la revendication 1, **caractérisé en ce que** le noeud d'accès (40) présente plusieurs interfaces (41, 42), qui sont configurées en fonction des données orientées abonné mises en mémoire dans le dispositif mémoire (60) en tant qu'interfaces vocales analogiques ou numériques.

3. Procédé selon l'une quelconque des revendications précédentes, **caractérisé en ce que** les données orientées abonné mises en mémoire contiennent des données d'accès pertinentes pour l'abonné, en particulier un numéro de téléphone d'abonné et un identifiant SIP, ainsi qu'au moins une caractéristique de service d'au moins un raccordement d'abonné analogique ou numérique.

4. Procédé selon l'une quelconque des revendications précédentes, **caractérisé en ce que** les signaux vocaux provenant d'un terminal d'abonné (20, 30) analogique ou numérique sont convertis dans le noeud d'accès (40) en signaux VoIP afin d'être transmis au serveur VoIP (50), et **en ce que** les signaux VoIP provenant du serveur VoIP (50) sont convertis dans le noeud d'accès (40) en signaux vocaux afin d'être transmis à un terminal d'abonné (20, 30) analogique ou numérique.

5. Procédé selon l'une quelconque des revendications précédentes, **caractérisé en ce que** les données d'identification d'interface contiennent le numéro de port et le numéro de slot d'extension de l'interface déterminée.

6. Procédé selon l'une quelconque des revendications précédentes, **caractérisé en ce qu'**une commande du noeud d'accès (40) permet d'établir une liaison VoIP entre le noeud d'accès (40) et le serveur VoIP (50), par l'intermédiaire de laquelle des signaux vocaux sont échangés entre le terminal d'abonné (20, 30) raccordé à l'interface (41, 42) déterminée et le serveur VoIP (50).

7. Procédé selon l'une quelconque des revendications précédentes, **caractérisé par** les étapes suivantes :
transmettre une instruction de commande au moyen du protocole de signalisation basé sur IP du serveur VoIP (50) au noeud d'accès (40) pour l'activation d'un contrôle de la ligne de raccordement d'abonné, qui est terminée par le noeud d'accès et le terminal d'abonné (20, 30) ;
contrôler la ligne de raccordement d'abonné (100, 101) terminée par le noeud d'accès (40) et le terminal d'abonné (20, 30), et
transmettre une information qui indique l'état de la ligne de raccordement d'abonné, au moyen du protocole de signalisation basé sur IP, du noeud d'accès (40) au serveur VoIP (50).

8. Procédé selon l'une quelconque des revendications précédentes, **caractérisé en ce qu'**un protocole de commande de noeud d'accès (ANCP) modifié est utilisé en tant que protocole de signalisation basé sur IP.

9. Système d'accès à large bande (10) permettant la commande d'interface orientée abonné d'un noeud d'accès, comprenant :
au moins un noeud d'accès (40) pouvant être commandé à distance, qui est relié à un serveur VoIP (50) par l'intermédiaire d'un réseau de communication (90) basé sur IP,
au moins un terminal d'abonné (20, 30) analogique ou numérique qui peut être raccordé au noeud d'accès (40) par l'intermédiaire d'une ligne de raccordement d'abonné (100, 101),
un dispositif mémoire (60) affecté au serveur VoIP (50), dans lequel des données orientées abonné permettant la configuration de l'au moins une interface vocale (41, 42) du noeud d'accès (40) sont mises en mémoire, où le noeud d'accès (40) présente :
au moins une interface vocale (41, 42),
un dispositif mémoire (47) destiné à mettre en mémoire une information d'identification concernant l'interface vocale (41, 42),
un dispositif (46) destiné à identifier si un terminal d'abonné (20, 30) est raccordé à l'interface vocale (41, 42),
un dispositif destiné à échanger des informations de signalisation avec le serveur VoIP (50) au moyen d'un protocole de signalisation basé sur IP,
un dispositif destiné à configurer l'interface vocale en réponse aux données orientées abonné affectées à l'interface vocale, où
le serveur VoIP (50) est conçu pour lire et pour transmettre des données orientées abonné au noeud d'accès (40) en réponse à une information d'identification, reçue, d'une interface vocale du noeud d'accès.

10. Système d'accès à large bande selon la revendication 9, **caractérisé en ce que** le noeud d'accès (40) peut être configuré de telle sorte que l'interface vocale est apte à transmettre des signaux vocaux à un raccordement d'abonné numérique ou analogique et à les recevoir de celui-ci.

11. Système d'accès à large bande selon la revendication 9 ou 10, **caractérisé en ce que** le noeud d'accès (40) présente un dispositif de conversion (44) destiné à convertir des signaux vocaux, qui proviennent d'un terminal d'abonné (20, 30) analogique ou numérique, en signaux VoIP et à convertir des signaux VoIP en signaux vocaux destinés à être transmis à un terminal d'abonné (20, 30) analogique ou numérique.

12. Système d'accès à large bande selon la revendication 9, 10 ou 11, **caractérisé en ce que** le noeud d'accès (40) présente un dispositif de contrôle (49) qui, en réponse à une instruction de commande du serveur VoIP (50), réalise un contrôle de la ligne de raccordement d'abonné (100, 101), qui est terminée par le noeud d'accès (40) et un terminal d'abonné (20, 30) analogique ou numérique.

13. Système d'accès à large bande selon l'une quelconque des revendications 9 à 12, **caractérisé en ce que** le noeud d'accès (40) présente au moins une interface de données (43) à large bande et peut être relié à une passerelle IP (70) par l'intermédiaire d'une liaison basée sur IP.

14. Système d'accès à large bande selon l'une quelconque des revendications 9 à 13, **caractérisé en ce que** le noeud d'accès (40) présente un dispositif de commande (45) qui est conçu pour établir une liaison de communication vocale basée sur IP avec le serveur VoIP (50) .

15. Noeud d'accès (40) destiné à être utilisé dans un système d'accès à large bande, comprenant :
au moins une interface vocale (41, 42),
un dispositif mémoire (47) destiné à mettre en mémoire une information d'identification concernant l'interface vocale (100, 101),
un dispositif destiné à identifier (46) si un terminal d'abonné (20, 30) est raccordé à l'interface vocale (100, 101),
un dispositif destiné à échanger des informations de signalisation avec un serveur VoIP (50) au moyen d'un protocole de signalisation basé sur IP,
un dispositif destiné à commander à distance l'interface vocale en réponse aux données orientées abonné affectées à l'interface vocale.

16. Noeud d'accès selon la revendication 15, **caractérisé par** un dispositif de conversion (44) destiné à convertir des signaux vocaux qui proviennent d'un terminal d'abonné (20, 30) analogique ou numérique en signaux VoIP et à convertir les signaux VoIP en signaux vocaux destinés à être transmis à un terminal d'abonné (20, 30) analogique ou numérique.

17. Noeud d'accès selon la revendication 15 ou 16, **caractérisé par** un dispositif de contrôle (49) pouvant être commandé à distance, qui, en réponse à une instruction de commande provenant d'un serveur VoIP (50), réalise un contrôle d'une ligne de raccordement d'abonné (100, 101), qui est terminée par le noeud d'accès (40) et un terminal d'abonné (20, 30) analogique ou numérique.
